# EUROPEAN PATENT SPECIFICATION

(11) **EP 0 641 706 B1**
(45) Date of publication and mention of the grant of the patent: **09.06.1999**
(21) Application number: 94113690.5
(22) Date of filing: 01.09.1994
(51) Int. Cl.: B62D 11/10, F16H 7/12, A01F 12/44, F16H 7/08

(54) **Working vehicle**
Arbeitsfahrzeug
Véhicule de travail

(30) Priority: 09.09.1993 JP 22481093; 08.12.1993 JP 34089993; 03.09.1993 JP 24396893
(43) Date of publication of application: 08.03.1995
(60) Divisional application: 97109840.5
(73) Proprietor: YANMAR AGRICULTURAL EQUIPMENT Co., Ltd., Osaka 530 (JP)
(72) Inventor: Hamada, Kenji, c/o Yanmar Agricultural, Osaka 530 (JP); Kirihata, Toshinori, c/o Yanmar Agricultural, Osaka 530 (JP); Nakamura, Masami, c/o Yanmar Agricultural, Osaka 530 (JP); Narahara, Youzaburo, c/o Yanmar Agricultural, Osaka 530 (JP); Kamikubo, Keita, c/o Yanmar Agricultural, Osaka 530 (JP); Takagi, Mikio, c/o Seirei Ind.Co.,Ltd., Okayama-shi, Okayama 702 (JP); Kawasaki, Koichi, c/o Seirei Ind.Co.,Ltd., Okayama-shi, Okayama 702 (JP)
(74) Representative: Görg, Klaus, Dipl.-Ing.

(56) References cited:
- DE-A- 2 256 609
- DE-A- 2 340 758
- DE-U- 8 221 573
- FR-A- 2 552 568
- GB-A- 2 224 423
- JP-A- 5 133 444
- PATENT ABSTRACTS OF JAPAN vol. 14 no. 480 (C-0771) ,19 October 1990 & JP-A-02 200113 (KUBOTA LTD) 8 August 1990,
- PATENT ABSTRACTS OF JAPAN vol. 010 no. 286 (M-521) ,27 September 1986 & JP-A-61 103047 (MAKINO MILLING MACH CO LTD) 21 May 1986,
- PATENT ABSTRACTS OF JAPAN vol. 016 no. 183 (C-0936) & JP-A-01 074933 (KUBOTA LTD) 20 March 1989,
- PATENT ABSTRACTS OF JAPAN vol. 016 no. 183 (C-0936) ,6 May 1992 & JP-A-04 023919 (ISEKI & CO LTD) 28 January 1992,

## Description

The present invention relates to a steering mechanism for a working vehicle such as combine according to the preamble of claim 1.

In these combines, left and right crawlers are respectively driven by left and right hydrostatic transmission device (hereinafter abbreviated to HST) and so operation is conducted by using two independent left and right operating levers linked to each trunnion lever of HST.

These combines are difficult to smoothly conduct operation and poor in maneuverability because speed changing operation and turning operation have to be made by using the two levers.

In the Japanese patent publication No. sho 40-18576 is disclosed a working vehicle, in which speed changing means such as accelerating pedal and turning means such as a steering wheel are respectively linked to each trunnion lever of each HST on the left. The right and forward/backward movement is made by using said speed changing means and left/right turning movement is made by using said turning means in order to conduct operation smoothly.

However, in the conventional art many kinds of cams are needed to link the speed changing means and the turning means to each gear lever on both sides and accordingly many kinds of bevel gears are needed to couple various means with the cams.

The invention provides an improved steering mechanism comprising the features of claim 1. Because of this invention, the left and the right sliders and the main slider can be incorporated in around the gear shaft in a compact manner and the gear lever and the handle can functionally be arranged around the gear shaft and thereby the structure of the operating section can be simplified and the production cost can now be easily reduced.

Further embodiments of the invention are outlined in the further dependent claims.

Other features and advantages of this invention will be apparent from the following description taken in connection with the accompanying drawing wherein:
Fig. 1 is a side view of the combine.
Fig. 2 is a plan of the combine.
Fig. 3 is a rear view of operating section of the combine.
Fig. 4 is a partially cutaway rear view of the operating section.
Fig. 5 is a cross-sectional bottom view of the operating section.
Fig. 6 is a cross-sectional side view of the operating section taken from the left.
Fig. 7 is another cross-sectional side view of the operating section taken from the left.
Fig. 8 is an illustration showing the gear lever and the handle in the neutral position. (At this time the combine is not working.)
Fig. 9 is an illustration showing the gear lever in the forwarding position and the handle in the neutral position. (At this time the combine goes straight forward.)
Fig. 10 is an illustration showing the gear lever in the forwarding position and the handle turned clockwise. (At this time the combine turns to the right.)
Fig. 11 is an illustration showing the gear lever in the forwarding position and the handle turned more clockwise. (At this time the combine spins or sharply turns to the right.)

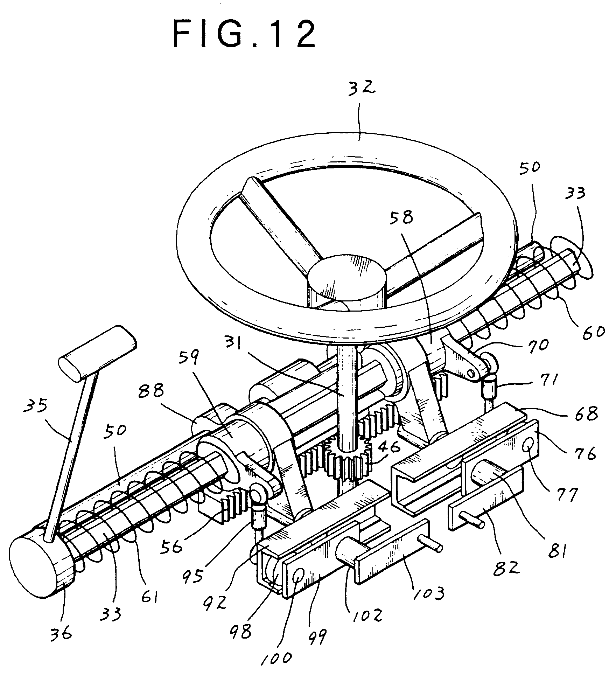

Fig. 12 is a perspective view of the operating section.

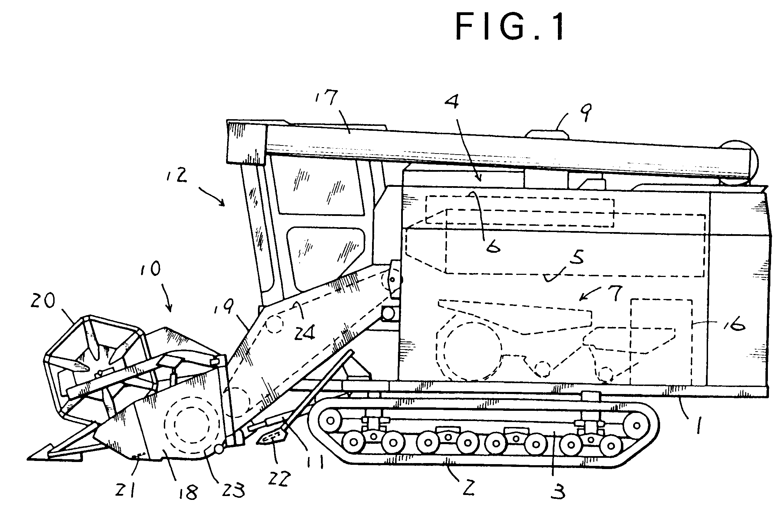

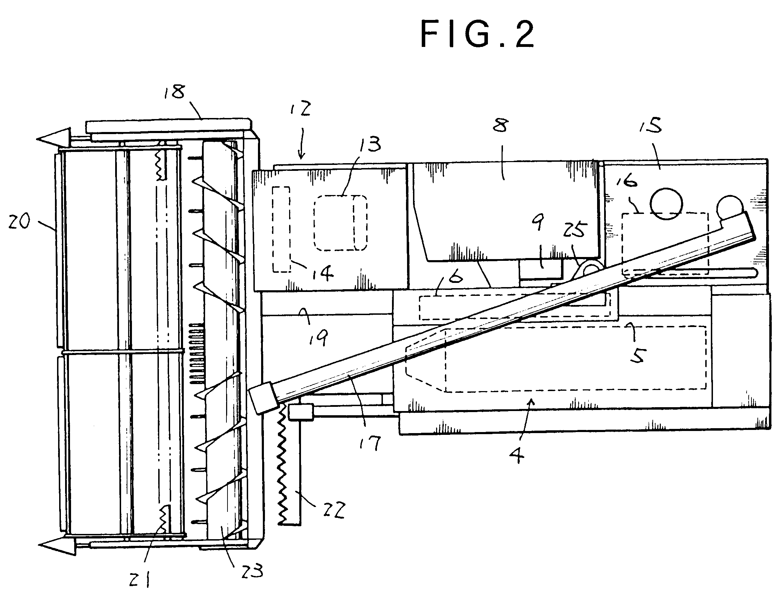

This invention will be described in more detail according to the attached drawings. In Figs. 1 and 2, vehicle floor 1 is mounted on a frame 3 which supports a couple of crawlers 2 on the left and the right sides of the combine. A hulling machine 4 provided with a screw type cylinder 5. A treating drum 6 and a grain sorter 7 are mounted on the vehicle floor 1. A grain tank 8 is designed to hold grains taking out front the hulling machine 4 by way of grain lifting pipe 9. A reaper 10 is designed to move up and down by means of hydraulic pressure cylinder 11 located below in front of the hulling machine 4. The operators' cabin 12 is provided with a seat 13 and an operation panel 14 both located in front of the grain tank 8. An engine cover 15 enclosing engine 16 is located behind the grain tank 8. An auger 17 serves for taking out grains in the grain tank 8.

The reaper 10 is provided with a couple of headers 18 to push their front end into yet unreaped plants and feeder house 19 is located behind the middle of the two headers to feed reaped plants to the hulling machine 4. Provided between the headers 18 are reels 20 for taking in unreaped plants, a first blade 21 and a second blade 22, each alternativly movable, and an auger 23 for taking in reaped plants. Reaped plants taken from the headers 18 are carried to the hulling machine 4 by means of a chain conveyer 24 inside the feeder house 19.

Provided to on the right side of the hulling machine is a second returning pipe 25 to get yet unhulled grains back to the hulling machine 4 through the treating drum 6 in order to get them rehulled and resorted.

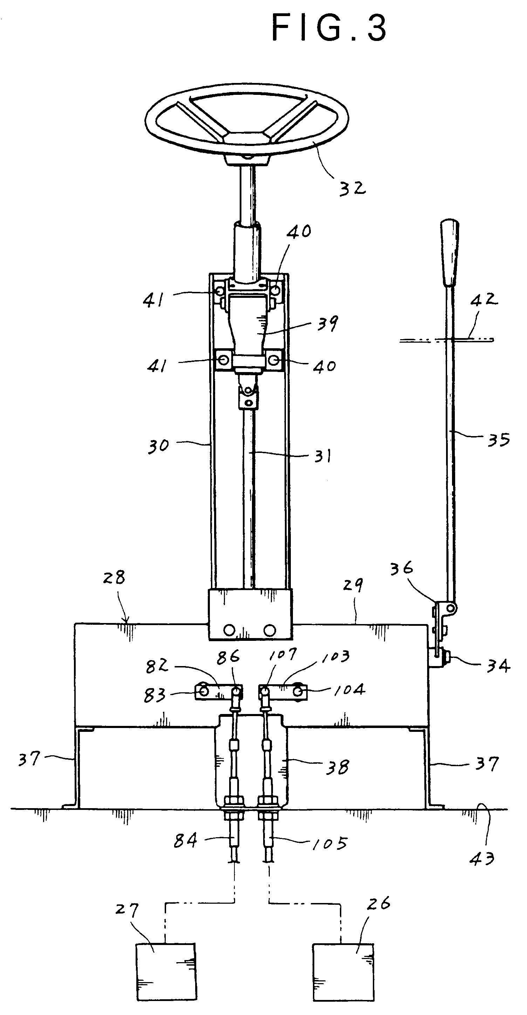

In Fig. 3 is shown an outline of an operating system relating to this invention. The operating system controls the position of a right tilting plate 26 and a left tilting plate 27 which respectively controls an hydraulic pressure motor provided to HST 120 that drives a couple of crawlers 2 on both sides of the combine, whereby the combine can be moved forward and backward or turned to the right or the left, gently or sharply according to the circumstances.

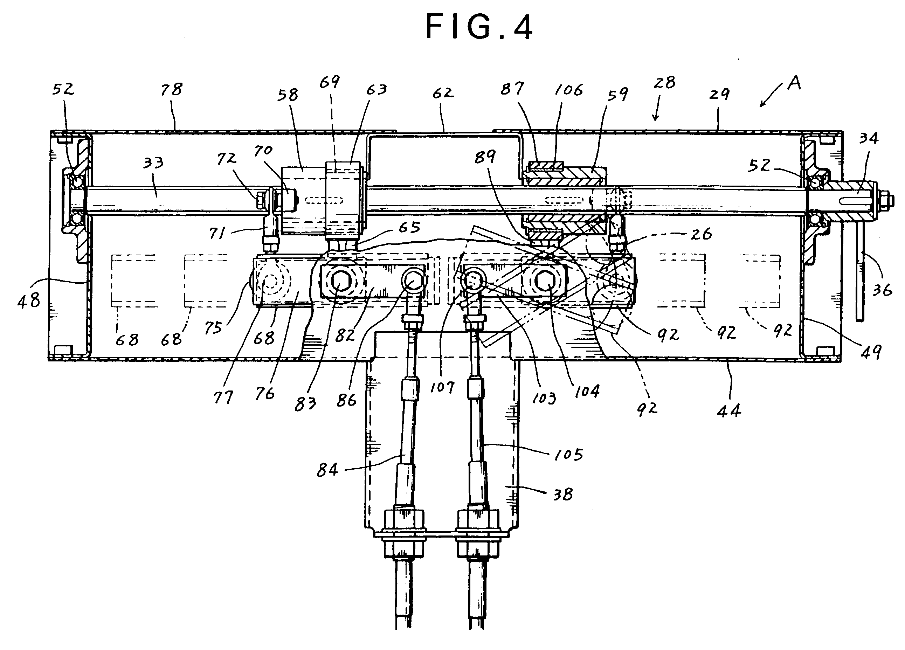

As shown in Figs. 3 and 4, in the operating system an operating gear is enclosed in gearbox 28 of which the shape is long in the lateral direction of the combine. In the middle part of a top plate 29 of the gearbox 28, a hollow column 30 to house a handle shaft 31 is erected. Provided to on top of the handle shaft 31 is a round handle 32. A main gear shaft 33 is put horizontally in the gearbox 28. To the right outside end 34 of the gear shaft 33 the lower end of gear lever 35 is fixed by means of lever stay 36. In the figure, 37 denotes a foot, 38 denotes a wire stay, 39 denotes a gear case, 40 denotes a bracket for fixing the gear case, 41 denotes a fixing bolt for the gear case, 42 denotes a lever guide for the gear lever and 43 denotes the floor.

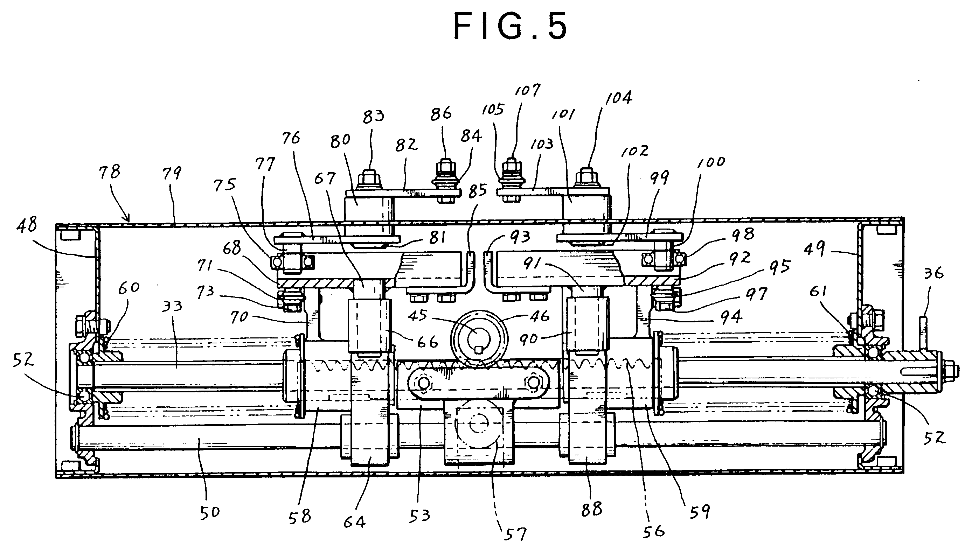

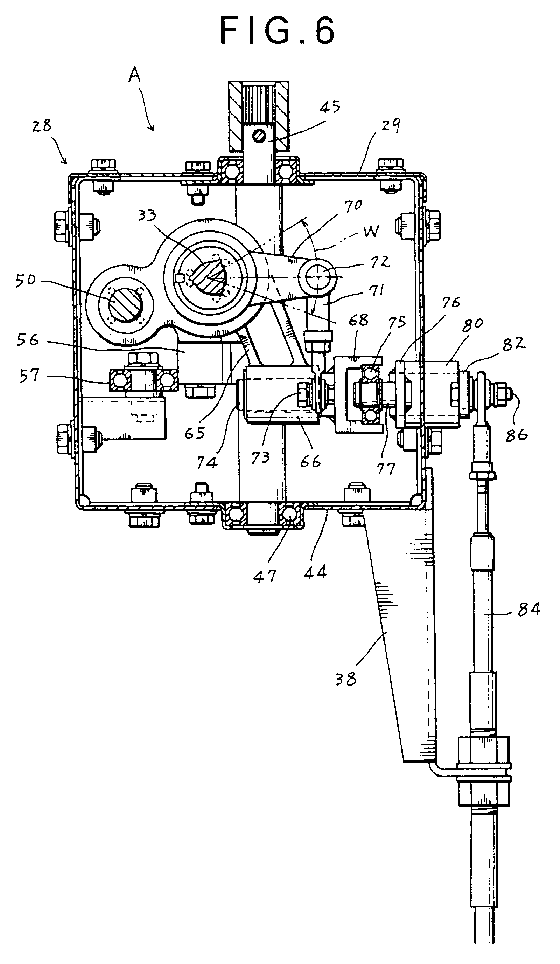

As shown in Figs. 5 and 6, a base 45 to receive the handle shaft 31 is rotatably placed between the top plate and a bottom plate 44. A pinion gear 46 is provided to around the base 45. Reference numeral 47 denotes a bearing. Also, as shown in Figs. 4 to 6, a sliding shaft 50 spanning left and right side walls 48, 49 of the gearbox 28 is placed parallel to the gear shaft 33 at a certain distance thereto. The shape of cross section of the gear shaft 33 is generally triangular. The reference numeral 52 denotes a bearing to receive and let the gear shaft rotate freely.

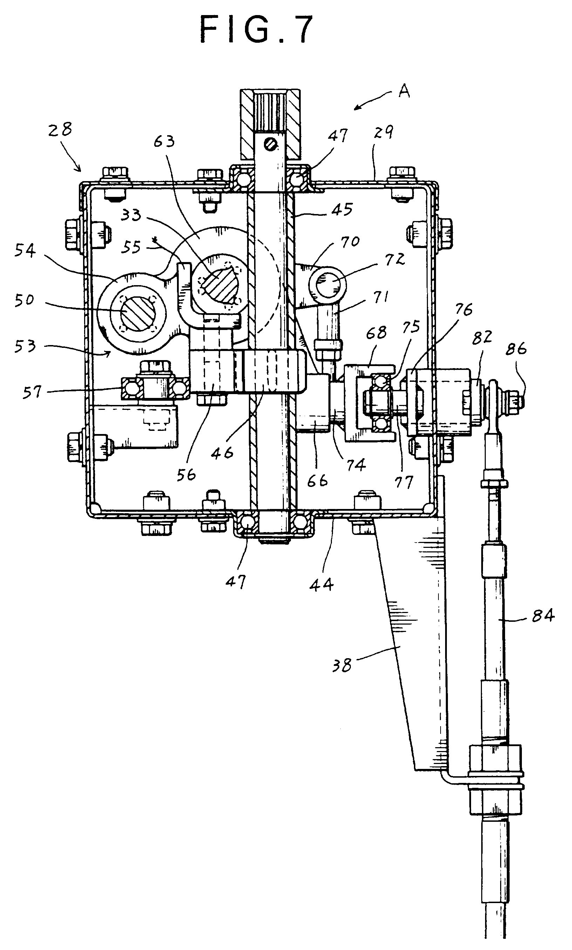

As shown in Figs. 5 to 7, a main slider 53 is mounted on the sliding shaft 50 in such a way as to freely move to the right and to the left. The main slider 53 is composed of a base 54 freely slidable on the sliding shaft 50 and an actuator 55 is positioned just below the gear shaft 33. A rack 56 extending in the axial direction of the gear shaft 33 is provided to under the actuator 55 and allowed to engage with the pinion gear 46. In the figure, the reference numeral 57 denotes rack guide.

By the above mentioned structure, the main slider 53 is moved to the right or the left on the sliding shaft 50 by means of the rack 56 and the pinion gear 46 which is attached to the base 45 of the handle shaft 31, when the handle 32 is turned to the right (clockwise) or to the left (counter-clockwise).

A couple of sliders 58 and 59 are slidably mounted on the sliding shaft 50 and the main gear shaft 33, one on the right side and another on the left side thereof. Springs 60, 61 are attached to the outside of the slider 58, 59 respectively in order to get the slider 58, 59 back to the original neutral Position. On the other hand, an invert U shaped stopper 62 is provided to the center of the top plate 29 of the gearbox 28 so that the sliders 58, 59 can be stopped at the neutral position by the stopper. A Left arm holder 63 is provided to on the right end of the left slider 58 so as to freely rotate thereon, as shown in Figs. 4 to 7. Moreover, a stopper 64 for preventing the left arm holder 63 from rotating counter-clockwise is extended from on the front side of the left arm holder 63 so that the stopper 64 can slide on the sliding shaft 50 freely. A left guide supporting arm 65 is extended from on the rear side of the left arm holder 63 down- and backward. A boss 66 is attached to the end of the arm 65 and a pivot pin 67 of which axis extends in the longitudinal direction is horizontally inserted in the boss 66 so as to freely rotate. The rear end of the pivot pin 67 is fixed to the center of the front side of left guide member 68 which extends in the lateral direction and of which the rear side opens backward. The reference numeral 69 denotes a bush.

As shown in Figs. 4 to 6, a left swinging arm 70 is extended from on the left end of the left slider 58. The upper end of left link 71 which can be freely extended and contracted is connected to the end of the left swinging arm 70 by means of a connecting pin 72. The lower end of the left link 71 and the front side of the left guide member 68 are connected by means of a connecting pin 73.

According to the above mentioned structure, the left guide member 68 is moved with the left slider 58 in one body on the sliding shaft 50 and the main gear shaft 33 in association of the sliding movement of the main slider 53. Also the left guide member 68 is designed to swing up and down around a pivot pin 74 together with the left slider 58 which is rotated in association with the rotating movement of the main gear shaft 33 caused by the gear lever 35. In Fig. 6, W shows the rotation range of the main gear shaft 33 and within the range the end of the left guide 68 swings up and down.

As shown in Figs. 4 to 7, a left rotator 75 is engaged with the left guide member 68 in such a way as to freely rotate and slide to the right and left along the left guide member. The left rotator 75 and the outside end of the left rotator supporting arm 76 are joined by means of bearing shaft 77 and the inside end of the arm 76 is joined to the rear wall 79 of the gearbox 28 by means of a boss 80 so that the arm 76 can pivot or freely swing up and down with an arm bearing shaft 81. Outside the gearbox 28, the end of the arm bearing shaft 81 is joined to the left end of left tilting plate actuating arm 82 by using fixing bolt 83 and the right end of the arm 82 is connected to the right tilting plate 27, which controls hydraulic pressure motor, by means of left connecting wire 84. In the figure, the reference numeral 85 denotes a stopper for the left rotator 75 and 86 denotes wire connecting pin.

By this structure, when the left guide member 68 slides to the right or the left keeping its tilting position, the left rotator supporting arm 76 is swung by means of the left rotator 75. At this time, the left tilting plate actuating arm 82 swings up down oppositely to the swinging movement of the rotator supporting arm 76. This moves the right tilting plate 27 by way of the left connecting wire 84 and can control the hydraulic pressure motor.

The above description has been made in relation to a series of members from the left slider 58 to the right tilting plate 27, but the similar description can also be made in relation to a series of members from right slider 59 to the left tilting plate 26 because both the series of members are made in the symmetric relationship. However, as a precaution, the names of another members will be listed below: reference numeral 87 denotes a right arm holder, reference numeral 88 is stopper for right arm holder, reference numeral 89 is right guide supporting arm, 90 is right boss, 91 is pivot pin, 92 is right guide, 93 is stopper for right rotator, 94 is right swinging arm, 95 is right link, 96, 97 are connecting pins, 98 is right rotator, 99 is a right rotator supporting arm, 100 is bearing shaft, 101 is boss, 102 is arm bearing shaft, 103 is right tilting plate actuating arm, 104 is fixing bolt, 105 is right connecting wire, 106 is bush and 107 is wire connecting pin.

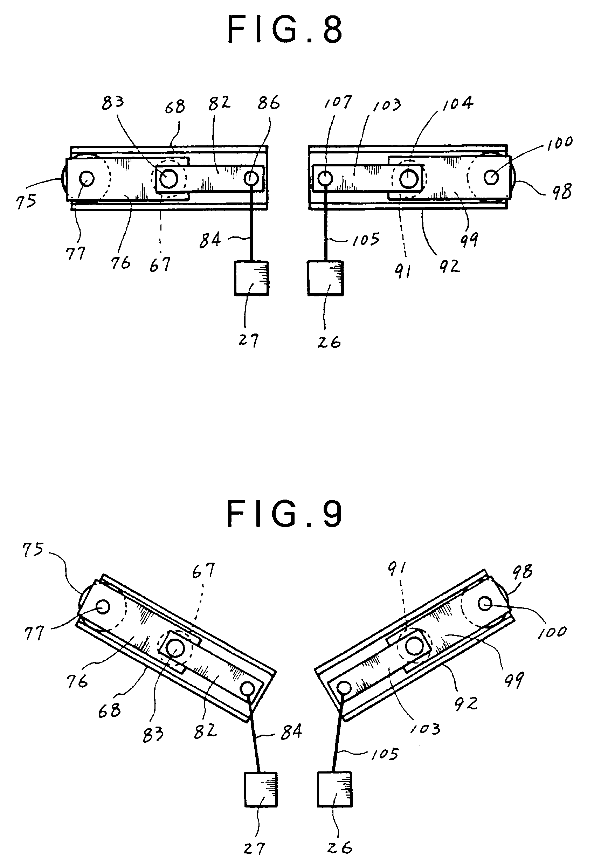

Now a sequence of motions caused by the above mentioned members will be described in reference with Fig. 4 and Figs. 8 to 11. As shown in Fig. 8, the left and right guides 68, 92, the left and right rotator supporting arms 76, 99 and the left and right tilting plate actuating arms 82, 103 generally keep horizontal position as long as the gear lever 35 and the handle 32 are put in the neutral position.

Meanwhile, when the gear lever 35 is put in the forwarding position, the main gear shaft 33 begins to rotate by which the left and right sliders are slid, the left and right swinging arms and the left and right links are moved and the left and right guides 68, 92 are turned around the pivot pins 67, 91. And thereby the left and right rotator supporting arms 76, 99, the arm bearing shafts 81, 102 and the left and right tilting plate actuating arms 82, 103 are put in the tilting position as shown in Fig. 9.

In this case, the tilting angle of the left tilting plate 26 is equal to that of the right tilting plate 27 and so the left and right crawlers 2, 2 turn forward in the same speed; thus, the combine can go straight forward.

However, when the handle is turned clockwise, the handle shaft 31 is rotated accordingly and the rack 56 coupled with the pinion 46 is moved to the left, by which the main slider 53 pushes and makes the left slider 58 slide to the left.

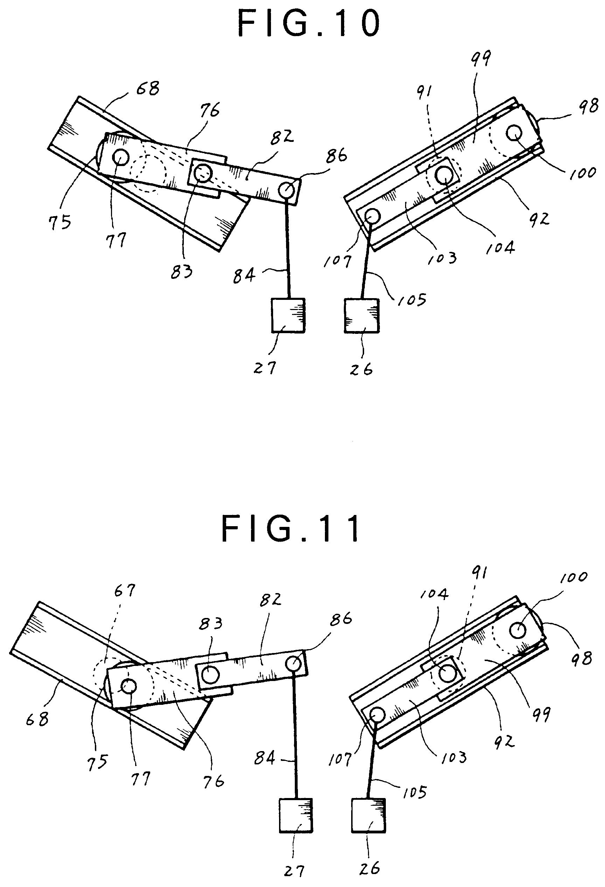

As a result, the left guide 68 coupled with the left slider 58 is slid to the left with its tilting position unchanged and the left rotator 75 put in the left side of the left guide 68 is slid generally to the center of the left guide as shown in Fig. 10, by which the left rotator supporting arm 76 and the right tilting plate actuating arm 82 take generally horizontal position and the right tilting plate 27 takes generally neutral position.

In this case, the speed of the right crawler 2 is decreased or even reduced to zero, while the left crawler 2 keeps advancing as ii is. As a result, the combine turns to the right gently.

When the handle 32 is turned more clockwise, the left guide 68 is slid more to the left with its tilting position un-changed and the left rotator 75 having been generally in the middle of the left guide 68 is moved to the right end of the left guide as shown in Fig. 11, by which each left side of the left rotator supporting arm 76 and the right tilting plate actuating arm 82 is lowered and each right side of theirs is raised. As a result, the right tilting plate 27 is tilted so as to get the combine go backward.

In this case, the right crawler 2 turns back, while the left crawler 2 turns forward. Thus, the combine can spin or turn clockwise sharply.

The combine can be spun or turned counterclockwise by turning the handle 32 in the opposite direction the above. Also, regardless of the handle position, the combine can be stopped by getting the gear lever 35 back to the neutral position or moved backward by putting the gear lever in the retreating position or turned to the right or the left while being moved backward by using both the handle and the gear lever. By such excellent maneuverability of the combine many kinds of cropping jobs can be carried out in an efficient manner.

That is, because the combine can be turned freely regardless of the gear lever position or stopped regardless of the handle position, not only is easy the maneuverability but also misoperation can be avoided and safety for workers in jobs is assured, by which cropping jobs can be made efficiently.

In this example, the slider 58, 59 is arranged in the left and right of the gearbox 28; however, as a matter of course they can be arranged above and below or obliquely to each other according to the circumstances.

## Claims

1. Steering mechanism for a working vehicle with crawlers, such as a combiner comprising
a gear shaft (33) housed in a gearbox (28) and rotating in accordance with a change of a gear lever (35),
a couple of left and right sliders (58, 59) which are designed to slide on the gear shaft (33) along its axial line,
a couple of left and right speed changing means (26, 27) which are linked to said left and right sliders (58, 59) and used to drive left and right crawlers,
a handle (32) which is provided to said gearbox (28) so as to freely rotate and
a main slider (53) which is slid by rotating said handle and thereby makes said sliders (58, 59) slide, characterized in that
said gear shaft (33) and said left and right sliders (58, 59) are moved in one body by manipulating said gear lever (35) in order to switch said speed changing means (26, 27) such that said speed changing means direct to the same direction at the same time and make said crawlers go straight forward or backward and
either one of said left and right sliders (58, 59) slid by said main slider (53) is put in such a position by turning said handle (32) as to stop said one of said crawlers or as to move it in the reverse direction to turn said working vehicle.

2. Steering mechanism as claimed in Claim 1, wherein a hulling machine (4) provided with a cylinder (5) and a grain sorter (7) is mounted on a vehicle floor (1) and thereby substantially forms a combine to crop grains.

3. Steering mechanism as claimed in Claim 1, wherein said handle (32) is substantially formed in circular shape.

4. Steering mechanism as claimed in Claim 1, wherein said left and right crawlers are moved by oil pressure means.

5. Steering mechanism as claimed in Claim 1, wherein the direction of changing motion generated by said gear lever (35) is straight line.

6. Steering mechanism as claimed in Claim 4, wherein the speed of said left and right crawlers are changed by said circular handle (32) and said gear lever (35).

## Patentansprüche

1. Lenkmechanismus für ein Arbeitsfahrzeug mit Raupenketten, wie beispielsweise ein Mähdrescher, umfassend
eine Getriebewelle (33), die in einem Getriebe (28) enthalten ist und sich entsprechend einer Veränderung eines Schalthebels (35) dreht,
ein linkes und rechtes Schiebeelement (58, 59), die auf der Getriebewelle (33) entlang deren Axiallinie verschiebbar sind,
ein linkes und rechtes Geschwindigkeitsänderungsmittel (26, 27), die mit den linken und rechten Schiebeelementen (58, 59) verbunden sind und zum Antrieb einer linken und rechten Raupenkette verwendet werden,
einen Lenker (32), der an dem Getriebe (28) frei drehbar vorhanden ist, und
ein Hauptschiebeelement (53), das durch Drehung des Lenkers verschoben wird und hierdurch die Schiebeelemente (58, 59) verschiebt, dadurch gekennzeichnet, dass
die Getriebewelle (33) und das linke und rechte Schiebeelement (58, 59) durch Betätigung des Schalthebels (35) gemeinsam bewegt werden, um die Geschwindigkeitsänderungsmittel (26, 27) derart umzuschalten, dass sie gleichzeitig in die gleiche Richtung zeigen und die Raupenketten geradeaus vorwärts- oder rückwärts laufen, und
eines der linken und rechten Schiebelemente (58, 59), die durch das Hauptschiebeelement (53) verschoben werden, durch Drehen des Lenkers (32) in eine solche Stellung gebracht wird, dass eine der Raupenketten angehalten oder in der umgekehrten Richtung bewegt wird, um so das Arbeitsfahrzeug zu wenden.

2. Lenkmechanismus nach Anspruch 1, bei dem eine mit einem Zylinder (5) und einem Körner-Sortierer (7) ausgestattete Schälmaschine (4) zum Enthülsen auf einem Fahrzeugboden (1) angebracht ist und hierdurch im wesentlichen einen Mähdrescher zur Getreideernte bildet.

3. Lenkmechanismus nach Anspruch 1, bei dem der Lenker (32) im wesentlichen kreisförmig ausgebildet ist.

4. Lenkmechanismus nach Anspruch 1, bei dem die linke und rechte Raupenkette durch Öldruckmittel bewegt werden.

5. Lenkmechanismus nach Anspruch 1, bei dem die durch den Schalthebel (35) erzeugte Bewegungsrichtungsänderung geradlinig verläuft.

6. Lenkmechanismus nach Anspruch 4, bei dem die Geschwindigkeit der linken und rechten Raupenkette durch den kreisförmigen Lenker (32) und den Schalthebel (35) verändert wird.

## Revendications

1. Mécanisme de direction destiné à un véhicule de travail muni de chenilles, tel qu'une moissonneuse-batteuse, comprenant
un arbre de transmission (33) logé dans une boîte d'engrenages (28) et tournant conformément à un changement de position d'un levier d'embrayage et de débrayage (35),
un couple de coulisseaux droit et gauche (58, 59) qui sont conçus pour coulisser sur l'arbre de transmission (33) suivant sa ligne axiale,
un couple de moyens de changement de vitesse droit et gauche (26, 27) qui sont articulés auxdits coulisseaux gauche et droit (58, 59) et utilisés pour entraîner des chenilles droite et gauche,
une manette (32) qui est disposée sur ladite boîte d'engrenage (28) de manière à tourner librement, et
un coulisseau principal (53) qui est amené à coulisser par une rotation de ladite manette, et amène ainsi lesdits coulisseaux (58, 59) à coulisser, caractérisé en ce que
ledit arbre de transmission (33) et lesdits coulisseaux gauche et droit (58, 59) sont déplacés en bloc grâce à une manipulation dudit levier d'embrayage et de débrayage (35) de manière à commuter lesdits moyens de changement de vitesse (26, 27) de façon que lesdits moyens de changement de vitesse s'orientent vers la même direction en même temps et amènent lesdites chenilles à se déplacer tout droit vers l'avant ou vers l'arrière, et
l'un ou l'autre desdits coulisseaux gauche et droit (58, 59) amenés à coulisser par ledit coulisseau principal (53) est placé, en tournant ladite manette (32) dans une position telle qu'il amène une dite chenille correspondante parmi lesdites chenilles à s'arrêter ou bien qu'il l'amène à se déplacer dans le sens inverse afin de faire tourner ledit véhicule de travail.

2. Mécanisme de direction selon la revendication 1, dans lequel une égreneuse (4) munie d'un cylindre (5) et d'un séparateur de grain (7) est montée sur un plancher (1) du véhicule, et forme ainsi pratiquement une moissonneuse-batteuse destinée à la récolte de grain.

3. Mécanisme de direction selon la revendication 1, dans lequel ladite manette (32) est de forme pratiquement circulaire.

4. Mécanisme de direction selon la revendication 1, dans lequel lesdites chenilles gauche et droite sont déplacées par un moyen à pression d'huile.

5. Mécanisme de direction selon la revendication 1, dans lequel l'orientation du mouvement variable généré par ledit levier d'embrayage et de débrayage (35) est une ligne droite.

6. Mécanisme de direction selon la revendication 4, dans lequel la vitesse desdites chenilles gauche et droite est modifiée à l'aide de ladite manette circulaire (32) et dudit levier d'embrayage et de débrayage (35).
